# FASCICULE DE BREVET EUROPEEN

(11) **EP 4 229 367 B1**
(45) Date de publication et mention de la délivrance du brevet: **03.07.2024**
(21) Numéro de dépôt: 21782722.9
(22) Date de dépôt: 22.09.2021
(51) Int. Cl.: G01J 5/0806, G01J 5/0875, G01J 5/05, G01J 1/02, G01J 1/04, G01J 5/04

(54) **DISPOSITIF DE COMPTAGE D'OBJETS**
VORRICHTUNG ZUM ZÄHLEN VON GEGENSTÄNDEN
DEVICE FOR COUNTING OBJECTS

(30) Priorité: 16.10.2020 FR 2010618
(43) Date de publication de la demande: 23.08.2023
(73) Titulaire: Eco Compteur, 22300 Lannion (FR)
(72) Inventeur: MILON, Christophe, 22300 LANNION (FR); ROUGEOLLE, Mathieu, 22300 PLOUBEZRE (FR)
(74) Mandataire: IPAZ
(86) Numéro de dépôt international: PCT/EP2021/076108
(87) Numéro de publication internationale: WO 2022/078723

(56) Documents cités:
- WO-A1-97/22089
- FR-A1- 2 899 003
- US-A- 3 792 275
- US-A1- 2009 166 538

## Description

### Domaine technique

La présente invention concerne un dispositif de comptage dans un lieu de passage, de préférence installé dans le milieu urbain, pour compter des objets passant dans une zone de détection et/ou détecter leur sens de passage.

Le domaine de l'invention est de préférence celui des dispositifs de détection de passant dans un lieu de passage, de préférence, en milieu urbain.

### Etat de la technique antérieure

On connaît des dispositifs de comptage pour compter les passants en milieu urbain. Ces dispositifs sont fonctionnels mais soulèvent plusieurs problèmes, notamment :
- de vandalisme car ces dispositifs sont à la portée des objets ou personnes circulant en pleine rue,
- de fragilité liée au système de mesure utilisé et/ou aux conditions de l'environnement extérieur,
- d'atténuation du signal utilisé pour la mesure car la protection de ce type dispositif se fait souvent au détriment de la qualité du signal mesuré.

Un but de l'invention est de remédier à au moins un des inconvénients précités.

Un autre but de l'invention est de proposer un dispositif de comptage d'objets :
- moins sujet au vandalisme, et/ou
- plus robuste et plus résistant à l'environnement extérieur, et/ou
- plus résistant au milieu urbain sans perdre en qualité de signal mesure.

L'état de la technique est par exemple représenté par les documents WO9722089, US20090166538, FR2899003 et US3792275.

### Exposé de l'invention

L'invention permet d'atteindre au moins un des buts précités par un dispositif de comptage tel que défini dans la revendication 1.

Ainsi, dans l'invention la paroi extérieure (comprenant la fenêtre) isole de manière étanche le moyen de comptage (et le logement entre la lentille et la fenêtre) des insectes et de l'humidité situés à l'extérieur du dispositif de comptage, tout en assurant une bonne transmission d'un flux à au moins une longueur d'onde comprise entre 5 et 12 micromètres détecté par un capteur infra rouge « passif » du moyen de mesure à travers la fenêtre comprenant du Germanium.

Pour la fenêtre, le Germanium est le matériau idéal permettant :
- une bonne solidité du matériau et donc une bonne protection contre les dégâts et/ou le vandalisme,
- une bonne transmission du flux lumineux à au moins une longueur d'onde comprise entre 5 et 12 micromètres, même pour une forte épaisseur de fenêtre ce qui améliore encore plus la solidité face aux dégâts et actes de vandalismes.

Le dispositif de comptage selon l'invention peut comprendre une surface extérieure lisse et sans discontinuité entre la fenêtre et son pourtour formé dans ladite paroi, de sorte que la fenêtre ne soit pas enfoncée vers l'intérieur du dispositif par rapport à une surface extérieure de la paroi. Ainsi, dans un mode de réalisation préférentiel de l'invention, on évite la possibilité de pouvoir insérer (notamment par un acte de dégradation volontaire) des objets ou déchets (chewing-gums, mégot de cigarette, etc.) à l'intérieur d'un creux et qui obstrueraient le passage du flux jusqu'au moyen de mesure.

La lentille de mesure du dispositif de comptage selon l'invention peut comprendre du germanium ou du polyéthylène. Le polyéthylène a une bonne transmission du flux lumineux à au moins une longueur d'onde comprise entre 5 et 12 micromètres mais est plus fragile que le Germanium : la lentille de mesure peut être en polyéthylène (par comparaison avec la fenêtre) car la lentille est plus protégée à l'intérieur du dispositif selon l'invention par comparaison avec la fenêtre.

La fenêtre du dispositif de comptage selon l'invention peut comprendre un revêtement protecteur positionné sur un coté de la fenêtre donnant sur l'extérieur dudit dispositif de comptage

Le revêtement protecteur peut comprendre un matériau carboné, de préférence du carbone adamantin.

La fenêtre du dispositif de comptage selon l'invention peut comprendre, le long de la direction de propagation dudit flux sur l'axe optique entre la fenêtre et la lentille de mesure, une épaisseur supérieure à 1 millimètre et/ou inférieure à 25 millimètres.

La fenêtre du dispositif de comptage selon l'invention peut être une lentille.

Le dispositif de comptage selon l'invention peut comprendre un espace, dans la direction de propagation dudit flux sur l'axe optique entre la fenêtre et la lentille de mesure, d'au moins 5 millimètres entre le centre optique de la lentille de mesure et la fenêtre positionnée devant ladite lentille de mesure.

Le dispositif de comptage selon l'invention peut comprendre des moyens d'accroche agencés pour fixer la paroi à un support.

La paroi du dispositif de comptage selon l'invention peut former un poteau relié à un sol portant ledit dispositif.

La lentille de mesure, de préférence son centre optique, du dispositif de comptage selon l'invention peut être positionnée à une distance de la surface du sol supérieure à 500 millimètres et/ou inférieure à 1000 millimètres, de préférence comprise entre 700 à 850 millimètres.

La lentille de mesure du dispositif de comptage selon l'invention peut être maintenue dans un moyen de maintien du moyen de comptage, ledit moyen de maintien comprenant au moins une première bride qui est en contact de ladite fenêtre.

La lentille de mesure du dispositif de comptage selon l'invention peut comprendre une lentille de Fresnel. De préférence, la lentille de mesure du dispositif de comptage selon l'invention est une lentille de Fresnel.

La lentille de Fresnel peut comprendre un angle de champ supérieur à 6 degrés.

La lentille de mesure du dispositif de comptage selon l'invention peut comprendre :
- un diamètre supérieur à 5 millimètres et/ou inférieur à 25 millimètres, de préférence égal à 12.7 millimètres, et/ou
- une épaisseur supérieure à 0.1 millimètres et/ou inférieure à 4 millimètres, de préférence égale à 1 millimètres.

Le dispositif de comptage selon l'invention comprend un moyen de mesure enregistrant et/ou captant ledit flux à au moins une longueur d'onde comprise entre 5 et 12 micromètres.

La paroi dudit dispositif de comptage selon l'invention peut être formée par un assemblage de plusieurs parties, de préférence en deux parties, agencées pour être fixées les unes aux autres de manière amovible.

Le dispositif de comptage selon l'invention peut comprendre deux fenêtres comprenant chacune du germanium, de préférence étant chacune entièrement composée de germanium, la lentille de mesure étant agencée pour pouvoir être positionnée devant, de préférence centrée sur, l'une ou l'autre des deux fenêtres selon deux positions réversibles du moyen de comptage dans ledit dispositif

### Brève description des figures

D'autres avantages et particularités de l'invention apparaîtront à la lecture de la description détaillée de mises en oeuvre et de modes de réalisation nullement limitatifs, et des dessins annexés suivants.
La figure 1 est une représentation schématique d'une vue de face d'un premier exemple de réalisation non limitatif d'un dispositif 100 de comptage selon l'invention ;
La figure 2 est une représentation schématique d'une vue en trois dimensions en éclaté de la paroi du dispositif 100 de comptage suivant le premier exemple de réalisation du dispositif de comptage selon l'invention ;
La figure 3 est une coupe de profil du premier exemple de réalisation non limitatif du dispositif 100 de comptage selon l'invention ;
La figure 4 est une vue de coupe de profil d'un second exemple de réalisation non limitatif d'un dispositif 400 de comptage selon l'invention.

### Description détaillée des figures

Il est bien entendu que les modes de réalisation qui seront décrits dans la suite ne sont nullement limitatifs. On pourra notamment imaginer des variantes de l'invention telle que définie dans la revendication 1 ne comprenant qu'une sélection de caractéristiques décrites par la suite isolées des autres caractéristiques décrites.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

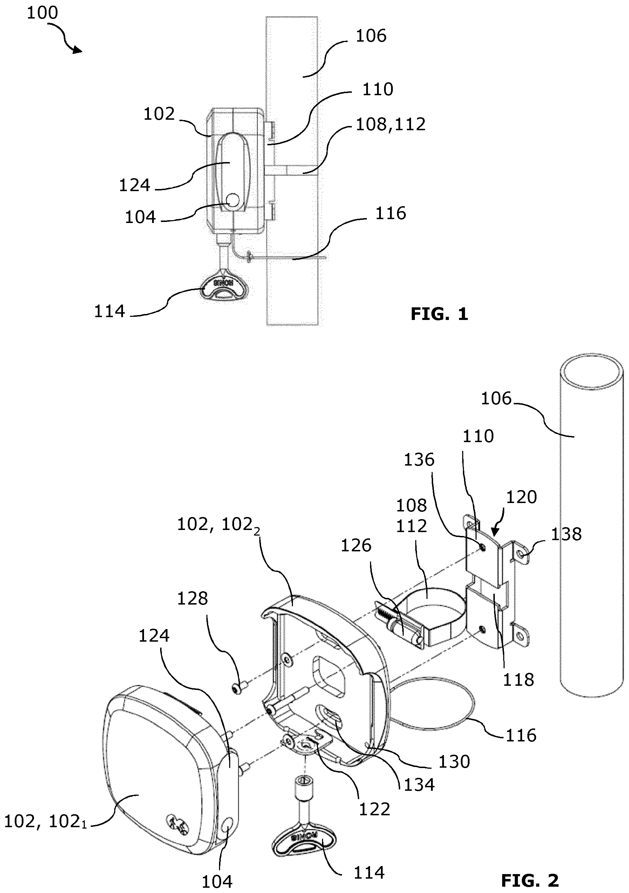

Les FIGURES 1, 2 et 3 illustrent un premier exemple de réalisation non limitatif d'un dispositif de comptage 100 selon l'invention.

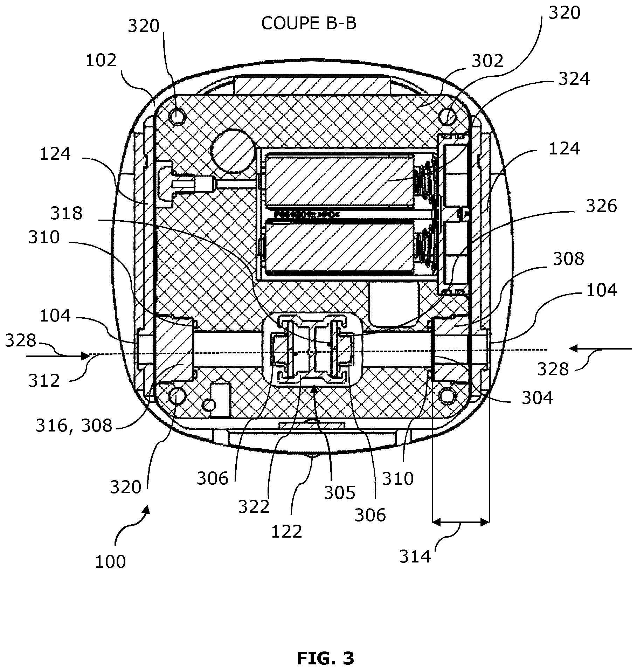

Le dispositif de comptage 100 illustré en figure 1 comprend :
- une paroi 102 délimitant un volume intérieur,
- un moyen de comptage 302 (visible en figure 3 mais absent de la figure 2 pour ne pas surcharger cette figure) d'objets positionné dans ledit volume intérieur et comprenant :
   o un moyen de mesure 305 agencé pour enregistrer et/ou détecter un flux (à au moins une longueur d'onde comprise entre 5 et 12 micromètres) émis vers ledit moyen de comptage 302 par les objets présents dans une zone de détection, et
   o une lentille de mesure 304 (visible en figure 3) délimitant optiquement la zone de détection à l'extérieur dudit dispositif de comptage 100.

Par flux, on entend un flux lumineux ou un rayonnement électromagnétique.

La paroi 102 du dispositif de comptage 100 comprend une fenêtre 104 :
- comprenant du germanium, de préférence étant entièrement composée de germanium, et
- positionnée devant, en particulier centrée sur, la lentille de mesure 304, de manière à former un logement entre la lentille 304 et la fenêtre 104 (ce logement étant un espace fermé et ayant de préférence la forme d'un tube dont les deux extrémités sont fermées respectivement par la fenêtre 104 et par la lentille 304).

La lentille de mesure 304 et ladite fenêtre 104 sont agencées pour transmettre un flux émis par les objets présents dans ladite zone de détection vers ledit moyen de comptage 302.

Dans la suite de la description, on pourra définir l'étanchéité d'une jonction selon la norme CEI/IEC 60529 :1989+A1 :1999 (édition 2.1 2 :1989 consolidée par l'amendement 1 :1999), par son degré de protection IP XY avec X un entier naturel égal à 0, 1, 2, 3, 4, 5, ou 6 et Y un entier naturel égal à 0, 1, 2, 3, 4, 5, 6, 7 ou 8.

La lentille 304 est assemblée au reste du moyen de comptage 302 par une jonction étanche protégeant le moyen de mesure 305 de la poussière et/ou de l'humidité en provenance de l'extérieur du moyen de comptage 302, cette jonction étanche étant une jonction de degré de protection IP XY (selon la norme CEI/IEC 60529 :1989+A1 :1999 mentionnée précédemment) avec :
- X supérieur ou égal à 4, de préférence supérieur ou égal à 5, de préférence supérieur ou égal à 6,
- Y supérieur ou égal à 3, de préférence supérieur ou égal à 4, de préférence supérieur ou égal à 5, de préférence supérieur ou égal à 6, de préférence supérieur ou égal à 7,
par exemple une jonction étanche de degré de protection IP 43 ou IP 45 ou de préférence IP 67.

La fenêtre 104 est assemblée au reste de la paroi 102 par une jonction étanche protégeant le moyen de comptage 302 de la poussière et/ou de l'humidité en provenance de l'extérieur de la paroi 102, cette jonction étanche étant une jonction de degré de protection IP XY (selon la norme CEI/IEC 60529 :1989+A1 :1999 mentionnée précédemment) avec :
- X supérieur ou égal à 4, de préférence supérieur ou égal à 5, de préférence supérieur ou égal à 6,
- Y supérieur ou égal à 3, de préférence supérieur ou égal à 4, de préférence supérieur ou égal à 5, de préférence supérieur ou égal à 6, de préférence supérieur ou égal à 7,
par exemple une jonction étanche de degré de protection IP 43 ou IP 46.

Ainsi, le dispositif de comptage 100 est un dispositif 100 qui fournit la paroi 102 protectrice pour protéger le moyen de comptage 302 de l'environnement extérieur audit dispositif de comptage 100.

Le moyen de comptage 302 est donc moins sujet au vandalisme puisqu'il est protégé par son enveloppe protectrice, la paroi 102 du dispositif de comptage 100.

La paroi permet aussi d'assurer une étanchéité du moyen de comptage 302. Par exemple, ce dernier est protégé par la paroi 102 de l'humidité et/ou des insectes qui pourraient se loger ou pondre dans le moyen de comptage 302.

Notamment, la fenêtre 104 en germanium possède des propriétés mécaniques qui permettent au dispositif de comptage 100 de lui garantir une forte résistance à l'environnement extérieur, tel que celui rencontré en milieu urbain comme par exemple les intempéries, les changements de températures, les chocs mécaniques (inférieurs ou égaux à 5 Joules (J) tels que définis par l'indice de protection électrique IK 08). Par conséquent, le dispositif de comptage 100 selon l'invention est plus robuste. Ainsi la fenêtre 104 permet d'assurer la solidité et la protection mécanique du moyen de comptage 302. La fenêtre 104 en germanium permet de garantir une protection supplémentaire à la lentille de mesure 304.

En outre, autre de cette forte résistance mécanique, le germanium atténue faiblement le signal servant à la mesure. Par conséquent, l'agencement du dispositif de comptage 100 lui permet à la fois d'être résistant à son environnement extérieur tout en garantissant un niveau de signal suffisant pour atteindre les performances nécessaires au comptage des objets.

A titre d'exemple, le germanium peut être de dureté égale à six Mohs.

La lentille de mesure 304 est un composant optique, c'est-à-dire un élément réfringent. La focale de la lentille de mesure 304 est supérieure ou égale à 18 millimètres (mm) et inférieure ou égale à 30 millimètres.

Le dispositif de comptage 100 comprend, de manière optionnelle, des moyens d'accroche 108 agencés pour fixer la paroi 102 à un support 106.

Le support 106 illustré en figure 1 est un poteau urbain 106 sur lequel est accroché le dispositif de comptage 100. Dans une variante, non illustrée, le support 106 peut aussi être un panneau de signalisation, un panneau publicitaire ou panneau d'affichage. Le support 106 peut être la partie se rapportant au poteau ou la partie tableau (i.e. support) fixée au poteau. Par conséquent, le dispositif de comptage 100 peut être directement positionné sur différents éléments urbains préexistants. Le dispositif de comptage 100 peut donc être positionné facilement dans l'environnement urbain.

De manière non limitative, les moyens d'accroche 108 illustrés sur les figures 1, 2 et 3 comprennent :
- un support de fixation 110 agencé pour être en contact du support 106, en particulier du poteau urbain 106, et
- une bride de serrage 112 pour serrer ledit support de fixation 110 au poteau urbain 106.

En particulier, le support de fixation 110 illustré en figure 2 comprend, en son centre, une ouverture 118 agencée pour accueillir une partie de la bride de serrage 112. La partie de la bride de serrage 112 agencée pour être positionnée dans l'ouverture 118 comprend un moyen de serrage 126. Le moyen de serrage 126 est agencé pour régler le diamètre de la bride de serrage 112 pour que cette dernière maintienne le support de fixation 110 contre le poteau 106.

Le support de fixation 110 illustré sur les figures 1 et 2 comprend une rainure centrale 120, surélevée, sur une épaisseur inférieure à 10 centimètres et supérieure à 1 millimètre, sur toute la longueur du support de fixation 110 de manière à laisser un faible espace disponible entre le poteau 106 et ledit support de fixation 110. Cet espace permet notamment d'insérer le moyen de serrage 126 de la bride de serrage 112 dans l'ouverture 118.

De préférence, la paroi 102 du dispositif de comptage 100 illustré en figures 1, 2 et 3 est formée par un assemblage de plusieurs parties agencées pour être fixées les unes aux autres de manière amovible.

Les parties de la paroi 102 peuvent être fixées par emboitement et/ou avec des moyens de fixation.

De manière non limitative, la paroi 102 du dispositif de comptage 100 illustrée en figure 2 comprend deux parties 102₁ et 102₂ fixées entres elles par emboitement de manière à former le volume intérieur de la paroi 102.

De cette manière, la paroi 102 du dispositif de comptage 100 est démontable, ce qui permet d'accéder de manière simplifiée au moyen de comptage 302. Par exemple, en cas de dysfonctionnement du moyen de comptage 302, un opérateur peut venir sur site récupérer le moyen de comptage 302 sans démonter l'ensemble du dispositif de comptage 100.

Toutefois, l'accès au moyen de comptage 100 est limité.

Une clé 114 est illustrée sur les figures 1 et 2. La clé 114 est montée de manière amovible dans un loquet de verrouillage 122 du dispositif de comptage 100.

Le loquet de verrouillage 122 est agencé pour bloquer l'accès au moyen de comptage 302. En particulier, le loquet de verrouillage 122 verrouille l'emboitement des deux parties 102₁ et 102₂ de la paroi 102. Le loquet de verrouillage 122 est agencé pour être seulement ouvert par la clé 114. Par conséquent, la paroi 102 du dispositif de comptage 100 peut seulement être ouverte et/ou démontée par la clé 114.

Une des parties 102₂ de la paroi 102 est en contact du support de fixation 110 et de la bride de serrage 112. Cette partie 102₂ de la paroi 102 comprend une première série de trous 134 agencée pour recevoir un premier moyen de fixation 128 pour fixer une partie 102₂ de la paroi 102 au support de fixation 110. En particulier, la première série de trous 134 comprend, de manière non limitative, deux trous 134 positionnés la partie de la paroi 102 en contact du support de fixation.

Le premier moyen de fixation 128 comprend au moins une vis 128 et une rondelle, de préférence deux vis 128 et deux rondelles, chacune des vis étant agencée pour être vissée dans une deuxième série de trous 136 du support de fixation 110.

La partie 102₂ de la paroi 102 au contact du support de fixation 110 comprend une troisième série de trous 130 agencée pour accueillir un second moyen de fixation (non illustré) de la paroi au poteau 106. Le second moyen de fixation comprend de préférence des vis.

Le support de fixation comprend une quatrième série de trous 138 agencée pour fixer le support de fixation 110 au poteau 106. La quatrième série de trous 138 comprend, de manière non limitative, quatre trous 138.

De manière non limitative, la troisième série de trous 130 comprend quatre trous positionnés sur la partie 102₂ de la paroi 102, la partie 102₂ de la paroi 102 comprend donc quatre moyens de fixation. Ces troisièmes trous 130 sont de préférence positionnés à des extrémités opposées sur la paroi 102. De cette manière, cela permet de régler facilement la position du dispositif de comptage 100 tout en assurant une grande fixation du dispositif de comptage 100 au poteau 106. Ainsi, le dispositif de comptage 100 illustré aux figures 1, 2 et 3 comprend trois moyens de maintien :
- la bride de serrage 112 pour maintenir le support de fixation 110 au poteau 106,
- le premier moyen de fixation 128 pour fixer la paroi 102 au support de fixation 110, et
- le second moyen de fixation pour directement fixer la paroi 102 au poteau 106.

Dans une variante, le dispositif de comptage 100 illustré en figure 1 comprend aussi un antivol 116 du moyen de comptage 302. L'antivol 116 est agencé pour fixer le moyen de comptage 302 au poteau 106 et/ou fixer le moyen de comptage 302 à la paroi 102.

De manière non limitative et comme illustré en figure 1, l'antivol 116 lie à la fois le moyen de comptage 302 au poteau 106 et le moyen de comptage 302 à la paroi 112.

L'antivol 116 est, de préférence, un câble ou une chaîne antivol 116 qui vient serrer le moyen de comptage 302 au poteau 106 et à la paroi 102.

L'antivol 116 peut être métallique, par exemple en inox, en aluminium pour éviter le phénomène de rouille.

De manière optionnelle, le moyen de comptage 302 comprend une cinquième série de trous 320. En particulier, la cinquième série de trous 320 comprend, de manière non limitative, quatre trous 320, chacun étant de préférence coaxial avec :
- un trou 130 de la troisième série de trou 130 de la partie 102₂ de la paroi 102 en contact du support de fixation 110, et avec
- un trou 138 de la quatrième série de trou 138 du support de fixation 110.

De cette manière, les seconds moyens de fixation peuvent à la fois s'insérer dans le moyen de comptage 302, la paroi 102, le support de fixation 110 et le poteau 106. Cela permet donc de positionner de manière stable le moyen de comptage 302 dans le volume intérieur de la paroi 102 et aussi d'améliorer la fixation du dispositif de comptage 100 au poteau 106. La fixation du dispositif de comptage 100 est donc encore plus robuste et plus performante.

Lorsque le moyen de comptage 302 est positionné dans le volume intérieur de la paroi 102, les parties 102₁, 102₂ de la paroi 102 sont assemblées par emboîtement.

De préférence, les parties de la paroi 102 sont verrouillées par la clé 114 qui actionne le loquet de verrouillage 122 des parties de la paroi 102. De préférence, le loquet de verrouillage agit comme une serrure, soit comme un dispositif de fermeture qui ne peut être ouvert que par la clé 114. Par conséquent, la combinaison de la clé 114 et du loquet de verrouillage 122 permet de limiter, notamment d'empêcher que des personnes non habilitées aient accès au moyen de comptage 302 et/ou aux parties 102₁, 102₂ de la paroi 102.

La paroi 102 peut être faite à partir de métal et/ou de matière plastique et/ou de matière naturelle, par exemple en bois. Dans le cas illustré sur les figures 1, 2 et 3, la paroi 102 est en plastique. La paroi 102 illustrée sur les figures 1, 2 et 3 comprend une épaisseur supérieure à 1 millimètre et inférieure à 100 millimètres, par exemple, elle est de 5 millimètres sur les figures 1, 2 et 3.

La figure 3 est une vue de coupe de la figure 1.

Le dispositif de comptage 100 de la figure 3 illustre le moyen de comptage 302 positionné à l'intérieur du volume intérieur de la paroi 102 du dispositif de comptage 100.

Le moyen de comptage 302 illustré en figure 3 comprend une lentille de mesure 304.

Dans une variante, le moyen de comptage 302 peut comprendre au moins un moyen de mesure 305 pour enregistrer le flux de manière à compter le nombre d'objets présents dans ladite zone de détection et/ou détecter le sens de passage desdits objets.

Le moyen de mesure 305 comprend au moins un capteur 306. L'au moins un capteur 306 peut être ou peut comprendre au moins une cellule pyroélectrique.

De manière non limitative, le capteur 306 du moyen de comptage 302 illustré sur la figure 3 est un capteur infra-rouge, en particulier infra-rouge passif. Le capteur 306 du dispositif de comptage 100 est dit passif car aucun flux lumineux n'est émis par ledit dispositif de comptage 100 et/ou le moyen de comptage 302. En effet, le capteur 306 est agencé pour détecter la chaleur émise par des objets circulant dans la zone de détection. Le capteur 306 peut par exemple être un Capteur Excelitas de référence PYQ2498.

La lentille de mesure 304 comprend du germanium ou du polyéthylène.

Par conséquent la lentille de mesure 304 peut être composée :
- du même matériau que la fenêtre 104 lorsque la lentille de mesure 304 est en germanium, ou
- d'un matériau différent que la fenêtre 104 lorsque la lentille de mesure 304 est en polyéthylène.

Par conséquent, la composition de lentille de mesure 304 s'adapte à l'environnement dans lequel peut être monté le dispositif de comptage 100.

La focale de la lentille de mesure 304 est de préférence égale à 25 millimètres lorsque la lentille de mesure 304 comprend du germanium. La focale de la lentille de mesure 304 est de préférence égale à 23 millimètres, lorsque la lentille de mesure 304 comprend du polyéthylène.

La lentille de mesure 304 faite de polyéthylène ou de germanium permet d'améliorer la focalisation, notamment la concentration, du flux sur le capteur 306.

La lentille de mesure 304 illustrée en figure 3 comprend une lentille de Fresnel 304. La lentille de mesure 304 illustrée en figure 3 est notamment une lentille de Fresnel en germanium.

La lentille de mesure 304, étant une lentille de Fresnel, peut être agencée pour comprendre un angle de champ supérieur à :
- 20 degrés (°), de préférence égal à 30 degrés, lorsque la lentille de mesure 304 est en polyéthylène, ou
- 7 degrés, de préférence égal à 15 degrés, lorsque la lentille de mesure 304 est en germanium.

La lentille de mesure 304 peut donc comprendre un angle de champ dépendant du matériau de la lentille de mesure.

Dans le cas illustré sur les figures 1, 2 et 3, la lentille de mesure 304 est en germanium. Le champ de la lentille de mesure 304 est notamment supérieur à 7° et inférieur à 75°. Dans le cas illustré, le champ de la lentille de Fresnel est de 15°.

La lentille de mesure 304 comprend de préférence :
- un diamètre supérieur à 5 millimètres et/ou inférieur à 25 millimètres, de préférence égal à 12.7 millimètres, et/ou
- une épaisseur supérieure à 0.1 millimètres et/ou inférieure à 4 millimètres, de préférence égale à 1 millimètres.

Dans le cas illustré en figure 3, la lentille de mesure 304 possède un diamètre de 12, 7 millimètres pour une épaisseur de 1 millimètre.

La lentille de mesure 304 comprend deux dioptres. Un premier dioptre orienté vers le capteur 306 et un second dioptre positionné sur un coté de la fenêtre 104 donnant sur l'extérieur dudit dispositif de comptage 100.

De manière optionnelle, la fenêtre 104 peut être une lentille 104, c'est-à-dire un élément réfringent. Dans ce cas, le dispositif de comptage 100 peut comprendre au moins deux lentilles :
- la lentille de mesure 304, et
- la lentille 104 associée à la fenêtre 104.

La fenêtre 104 peut être dans ce cas de même focale que la lentille de mesure 304 ou de focale différente. Par exemple, la focale de la fenêtre 104 peut être de 20 millimètres.

Dans le cas illustré sur les figure 1, 2 et 3, la fenêtre 104 n'est pas une lentille optique, mais une couche, de préférence vitrée, laissant passer le flux pour que ce dernier atteigne la lentille de mesure 304. Dans ce cas, la fenêtre 104 transmet le flux.

Dans une variante, la fenêtre 104 du dispositif de comptage 100 comprend un revêtement protecteur positionné sur le côté de la fenêtre 104 donnant sur l'extérieur dudit dispositif de comptage 100. En particulier, ce côté est visible sur la face du dispositif de comptage 100 illustré en figure 1. Le revêtement protecteur permet donc de protéger la fenêtre 104 des rayonnements lumineux, notamment solaire.

Ce revêtement protecteur peut comprendre, un matériau carboné, de préférence du carbone adamantin aussi connu sous le nom anglais Diamond Like Carbon (DLC).

Ainsi, le revêtement protecteur est positionné sur le second dioptre de la lentille de mesure 304.

Par exemple, le revêtement protecteur de la fenêtre 104 illustré sur les figures 1, 2 et 3, est un carbone adamantin, par exemple de référence MIL-C-675C ou MIL-M-13508C ou MIL-STD-810E.

La lentille de mesure 304 comprend de manière optionnelle un traitement antireflet sur le premier dioptre S1.

De préférence, la lentille de mesure 304 est une lentille convexe-plan. Ainsi, dans cette configuration, le premier dioptre peut être de forme convexe et le second dioptre peut être de forme plan.

De manière optionnelle, le revêtement protecteur peut comprendre une épaisseur inférieure à 14 micromètres (µm), de préférence comprise entre 8 et 12 micromètres.

Dans une première variante, le facteur de transmission du revêtement protecteur sur le second dioptre peut être supérieur à 85 %, de préférence supérieur à 87 % lorsque le revêtement protecteur est compris entre 8 et 12 micromètres.

Dans une seconde variante, le facteur de transmission du revêtement protecteur sur le second dioptre peut être supérieur à 75 %, de préférence supérieur à 80 % lorsque le revêtement protecteur est compris entre 11 et 12 micromètres.

La fenêtre 104 illustrée sur les figures 1, 2 et 3, comprend de préférence, le long de la direction de propagation 328 dudit flux sur l'axe optique 312 entre la fenêtre 104 et la lentille de mesure 304, une épaisseur supérieure à 1 millimètre et/ou inférieure à 25 millimètres.

En particulier, la fenêtre 104 du dispositif 100 illustré sur les figures 1, 2 et 3 possède une épaisseur de 1 millimètre.

L'épaisseur de la fenêtre permet de garantir une protection efficace du dispositif de comptage 100, en particulier de la lentille de mesure 304 contre les chocs mécaniques.

Le dispositif de comptage 100 comprend un espace 314, dans la direction de propagation 328 dudit flux sur l'axe optique 312 entre la fenêtre 104 et la lentille de mesure 304, d'au moins 5 millimètres entre le centre optique de la lentille de mesure 304 et la fenêtre 104 positionnée devant ladite lentille de mesure 304.

En particulier, l'espace 314 illustré en figure 1 est de 20 millimètres.

De cette manière, la lentille de mesure 304 est positionnée à proximité de la fenêtre 104, ce qui maximise la taille de zone de détection.

L'espace 314 permet de protéger, par exemple des rayons lumineux solaires, la lentille de mesure 304 car cette dernière n'est pas directement positionnée derrière la fenêtre 104. En outre, l'espace 314 est l'espace nécessaire entre la lentille de mesure 314 et la fenêtre 104 pour optimiser la captation du flux par la lentille de mesure 304, c'est-à-dire obtenir la meilleure focalisation possible du flux par la lentille de mesure 304.

De préférence, la fenêtre 104 face à la lentille de mesure 304 est centrée sur la lentille de mesure 304 de sorte que la surface totale de la lentille de mesure 304 est protégée et/ou couverte par la fenêtre 104.

La lentille de mesure 304 du dispositif de comptage 100 est positionnée à une distance de la surface du sol supérieure à 500 millimètres et/ou inférieure à 1000 millimètres, de préférence comprise entre 700 à 850 millimètres.

Dans le cas illustré sur les figures 1, 2 et 3, la lentille de mesure 302, en particulier son centre optique (non illustré), est positionnée à 850 millimètres plus ou moins 10 millimètres de la surface du sol.

Le dispositif de comptage 100 est aussi agencé pour détecter le sens de passage des objets circulant dans la zone de détection.

Le flux capté et enregistré par le capteur 306 comprend une longueur d'onde comprise entre 5 et 12 micromètres.

Ainsi, le dispositif de comptage 100 est agencé pour détecter tout objet présent dans sa zone de détection produisant un rayonnement thermique entre 5 et 12 micromètres.

Ainsi, les objets pouvant être détectés par le dispositif de comptage 100 sont, par exemple, des personnes, des animaux, des vélos, des motocycles, en mouvement ou statiques.

Le moyen de mesure 305 du dispositif de comptage 100 comprend une portée inférieure à 20 mètres, de préférence étant de 1 mètre ou 4 mètres ou 15 mètres.

Par portée, on entend la portée visuelle correspondant à la distance maximale jusqu'à laquelle le capteur 306 du moyen de mesure 305 peut détecter des objets. Notamment, la portée visuelle du capteur 306 est estimée suivant un axe perpendiculaire à sa surface photosensible du capteur 306 et s'étendant à partir de cette surface jusqu'à ce que le capteur 306 ne distingue plus d'objet.

De manière non limitative, le moyen de mesure 305 du dispositif de comptage 100 comprend trois gammes de portée, par exemple de 1 mètre ou 4 mètres ou de 15 mètres, dépendant des caractéristiques du capteur 306 utilisé.

Ainsi, le moyen de comptage 302 peut comprendre des capteurs ayant des sensibilités (de détection) différentes.

La zone de détection du dispositif de comptage 100 dépend donc de la portée du capteur 306 et aussi des caractéristiques optiques de la lentille de mesure 304, telles que sa focale, son champ.

Le moyen de comptage 302, notamment le moyen de mesure 305, comprend de manière optionnelle, une carte capteur 318 sur laquelle est positionné le capteur 306 et un support de carte 322 pour maintenir la carte capteur 318 dans le moyen de mesure 305. La carte capteur 318 comprend une carte électronique et les éléments nécessaires au conditionnement du signal du capteur 306.

Dans une variante, illustrée sur la figure 3, le capteur 306 peut comprendre deux zones de captation distinctes. Une de ces deux zones peut, par exemple, être obturée par un cache pixel 326 positionné en amont ou sur une des zones de captation dudit capteur 306. Ainsi, le moyen de comptage 302 comprend ou se compose des éléments servant à compter des êtres vivants ou des objets et/ou déterminer leurs sens de passage tels que décrit dans la demande FR2899003 A1.

De manière optionnelle, le moyen de comptage 302 comprend un moyen de maintien de la lentille de mesure 304.

Dans ce cas, la lentille de mesure 304 du dispositif de comptage 100 est maintenue dans un moyen de maintien du moyen de comptage 302. Le moyen de maintien comprend au moins une première bride 308 qui est, de préférence, en contact de fenêtre 104. Ainsi, une telle bride permet d'améliorer l'étanchéité du dispositif de comptage 100. Le moyen de maintien du moyen de comptage 302 comprend aussi un joint 310 agencé pour assurer une étanchéité, par exemple par compression axiale, de la lentille de mesure 304 dans la première bride 308. Par exemple, la combinaison du joint 310 et de la première bride 308 est agencée pour bloquer l'intrusion d'eau dans le volume intérieur de la paroi 102, notamment au niveau de la lentille de mesure 304. La première bride 308 permet de monter de manière simple la lentille de mesure 304 dans le moyen de comptage 302.

Ainsi, la paroi 102 du dispositif de comptage 100 est une première protection, hermétique, qui est étanche et qui protège des agressions extérieures telles que les chocs et/ou les insectes. En outre, le dispositif de comptage 100 est agencé pour que le moyen de comptage 302, notamment le pourtour du moyen de comptage 302 assure la fonction de seconde enveloppe protectrice de la lentille de mesure 304 et/ou du moyen de mesure 305. Par exemple, si la paroi 102 du dispositif de comptage 100 venait à être endommagée, le moyen de comptage 302 reste encore protégé par son pourtour. En particulier, le pourtour du moyen de comptage 302 forme une enveloppe étanche. Le moyen de comptage 302 est donc étanche. Le pourtour du moyen de comptage 302 est supérieur à 1 millimètre et inférieur à 25 millimètres. Le pourtour du moyen de comptage 302 comprend, à titre d'exemple, une épaisseur de 4 millimètre.

Le moyen de comptage 302 illustré en figure 3 comprend de manière non limitative une alimentation électrique 324. L'alimentation électrique peut être une batterie rechargeable ou des piles. Bien entendu, dans une variante non illustrée, le moyen de comptage peut être autonome, par exemple basée sur une alimentation électromagnétique avec l'utilisation d'inductance.

Dans une variante, le dispositif de comptage 100 comprend deux fenêtres 104 comprenant chacune du germanium. Dans ce cas, chacune des fenêtres 104 est entièrement composée de germanium. La lentille de mesure 304 est agencée pour pouvoir être positionnée devant, notamment centrée sur, l'une ou l'autre des deux fenêtres 104 selon deux positions réversibles du moyen de comptage 302 dans le dispositif de comptage 302. Par conséquent, si le dispositif de comptage 302 comprend seulement une lentille de mesure 304, le moyen de comptage 302 peut être inséré dans le volume intérieur de la paroi 102 dans deux sens. L'insertion du moyen de comptage 302 en est donc facilitée et plus rapide et un opérateur montant le moyen de comptage 302 dans la paroi 102 peut facilement en changer l'orientation sans toucher au moyen d'accroche 108 tel que la bride de serrage 112.

Le dispositif de comptage 100 illustré sur les figures 1, 2 et 3 comprend les deux fenêtres 104 en germanium positionnées sur des côtés opposés audit dispositif de comptage 100.

De manière non limitative, le moyen de comptage 302, notamment le moyen de mesure 305, illustré en figure 3 comprend aussi deux capteurs 306 et une seule lentille de mesure 304 donnant sur un côté du moyen de comptage 302.

Sur le côté où le moyen de comptage 302 ne comprend pas de lentille de mesure 304, le moyen de comptage 302 peut comprendre un cache 316. Ce cache 316 obture le passage du flux vers le moyen de mesure 305, en particulier le capteur 306, de manière à le protéger des rayonnements lumineux (Infra-Rouge, Ultra-Violet, Visible) qui pourraient l'endommager. Le cache 316 est de préférence positionné à l'emplacement de la lentille de mesure 304. Le cache 316 peut aussi être maintenu dans la première bride 308 de la lentille. Le cache 316 peut comprendre une partie qui est emboitée dans la première bride 308 pour obturer le passage des faisceaux lumineux et/ou du flux dans la première bride 308 de manière à protéger le capteur 306 des rayonnements lumineux. Dans le cas illustré en figure 3, le cache 316 et la première bride 308 forment une seule et unique pièce. La première bride 308 comprend aussi le joint 310 qui est cette fois directement comprimé contre la première bride 308 puis qu'il n'y a pas de lentille de mesure 304 positionnée entre le joint 310 et la bride 308.

Dans une variante non illustrée, le moyen de comptage 302 peut comprendre deux lentilles de mesures 304. Dans ce cas, les deux lentilles de mesure 304 sont, de préférence, positionnées sur des côtés opposés dudit moyen de comptage 302, de manière détecter des objets dans deux directions différentes. Les deux fenêtres 104 sont chacune positionnée devant, de préférence centrée sur, une des deux lentilles de mesure 304. Dans cette variante non illustrée, le moyen de comptage ne comprend pas de cache 316 tel que décrit plus haut. Chacune des deux lentilles de mesures 304 peut être centrée sur le capteur 306 correspondant et, être de préférence, maintenue dans la première bride telle que décrit dans le cas où le moyen de comptage 302 comprend une seule fenêtre 104 et une lentille de mesure 304. Les deux lentilles de mesures 304 peuvent être centrées sur le même axe optique 312.

Ainsi, le moyen de comptage 302 peut comprendre autant de capteur 306 que de lentille de mesure 304. Le moyen de comptage 302 peut comprendre autant de carte capteur 318 et/ou cache pixel 326 et/ou de support de carte 322 que de lentille de mesure 304.De préférence, lorsque le moyen de comptage 302 comprend deux lentilles de mesure 304, le moyen de comptage 302 comprend deux capteurs 306 étant chacun agencé pour capter le flux retour de d'une des lentilles de mesure 304. De manière similaire, le moyen de comptage 302 peut comprendre deux cartes capteur 318 et deux caches pixels 326 et deux supports de carte 322. Dans le cas illustré en figure 3, le moyen de comptage comprend un seul et unique support de carte 322 pour deux cartes capteur 318 différentes.

De manière optionnelle, le moyen de comptage comprend deux caches pixels 326, deux cartes capteur 318 et un seul support de carte 322.

Ainsi, le moyen de comptage peut être agencé pour comprendre de manière double les éléments permettant d'enregistrer le flux lumineux dans les deux directions, et cela même si un seul côté de détection est possible (dans le cas où un cache 316 obture un capteur 306). L'agencement du moyen de mesure 305 est agencé de manière uniforme pour une détection des objets dans une direction et/ou un sens ou dans deux directions et/ou sens différentes.

Le dispositif de comptage 100 illustré sur les figures 1, 2 et 3 comprend une surface extérieure lisse et sans discontinuité entre la fenêtre 104 et son pourtour 124 formé dans ladite paroi 102, de sorte que la fenêtre 104 ne soit pas enfoncée vers l'intérieur du dispositif 100 par rapport à une surface extérieure de la paroi 102.

Un tel agencement permet de limiter la présence de logements dans lesquels, par exemple, des insectes pourraient se loger ou de la neige pourrait stagner, ou des personnes pourraient laisser des déchets tels que des chewing-gums.

Le pourtour 124 de la fenêtre en germanium 104 est comme une seconde bride 124. La fenêtre en germanium 104 et le pourtour 124 sont lisses et de même niveau. Ils ne présentent aucune excroissance de l'un par rapport à l'autre. Le pourtour 124 est, par exemple, en plastique ou en bois. Par conséquent, seule la fenêtre 104 est composée à partir d'un matériau onéreux afin de garantir une protection efficace à la lentille de mesure 302.

Comme illustré sur les figures 1, 2 et 3, l'axe optique 312 la lentille de mesure 304 est parallèle à la surface du sol, à plus ou moins 5 degrés près.

En outre, l'axe optique 312 de la lentille de mesure 304 est orthogonal, à plus ou moins 5 degrés, de la direction de déplacement desdits objets circulant dans la zone de détection. De cette manière, la détection du flux par le capteur 306 est plus précise.

Le dispositif de comptage 100 peut comprendre, de manière optionnelle, des moyens de communication (non illustrés) (filaires ou non filaires) et agencés pour communiquer des données et/ou recevoir des données avec un dispositif de commande (non illustré) positionné à l'extérieur dudit dispositif 100 et/ou à l'intérieur dudit dispositif 100.

Les moyens de communication peuvent être agencés pour communiquer les données d'un objet détecté ou plusieurs objets détectés dans la zone de détection vers un boitier collecteur d'informations, lequel peut communiquer avec un réseau informatique longue portée pour y transmettre les données de passage (comprenant par exemple le comptage et le sens) de l'un ou plusieurs objets détectés, par exemple par communication radio cellulaire en utilisant, par exemple, un modem ou une carte SIM.

L'ensemble des données ainsi collectées peut ainsi être transmis et donc utilisé par un ou plusieurs utilisateurs pour différents objectifs, tels que, par exemple, l'affichage des données sur un tableau, le suivi à distance des informations collectées, etc.

Le dispositif de comptage 100 peut comprendre un module de communication 3G et/ou 4G et/ou une liaison Bluetooth comprenant une carte SIM agencée pour envoyer les données collectées, par exemple, le comptage et/ou le sens de passage de d'objets vers un serveur sur internet.

De cette manière, les données collectées peuvent être exploitées et présentées aux utilisateurs du dispositif de comptage 100.

Les données collectées peuvent par exemple, être envoyées automatiquement ou après réception par le dispositif de comptage 100 d'une commande provenant d'un utilisateur via le serveur internet.

La fréquence d'envoi peut être journalière, mensuelle, annuelle ou toutes les heures.

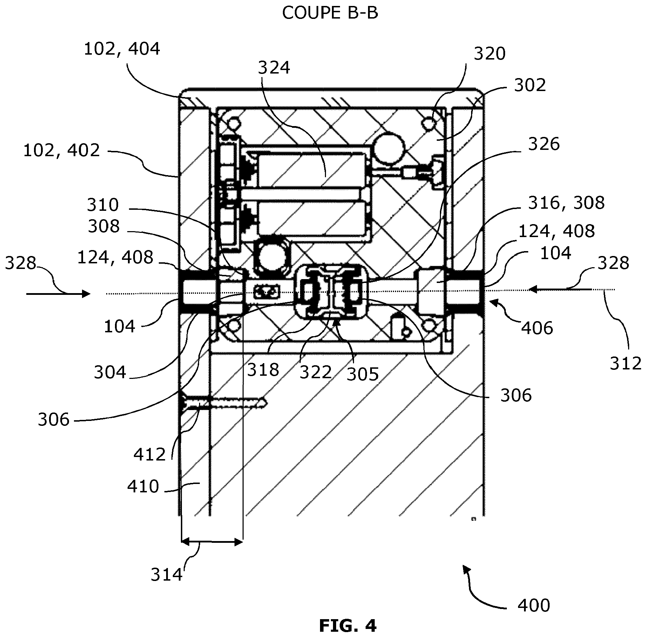

La figure 4 illustre un second exemple d'un dispositif de comptage 400 selon l'invention.

Le dispositif de comptage 400 illustré en figure 4 comprend les mêmes éléments que le dispositif de comptage 100 illustré sur les figures 1, 2 et 3. Ainsi, seules les différences avec le dispositif 100 illustré sur les figures 1, 2 et 3 seront décrites.

Le dispositif de comptage 400 illustré en figure 4 ne comprend pas de moyens d'accroche 108 tel qu'illustré sur les figures 1, 2 et 3.

En effet, dans le cas de la figure 4, la paroi 102 du dispositif de comptage 400 forme un poteau relié à un sol portant ledit dispositif 400. Ainsi, le dispositif de comptage 100 forme un seul et même ensemble.

Ainsi, le dispositif de comptage 400 est directement l'élément urbain. Le dispositif de comptage 400 est donc plus discret dans le milieu urbain (i.e. environnement urbain), tel que dans une rue ou sur une place. Il se fonde directement à l'environnement urbain. Par conséquent, le dispositif de comptage 400 est moins sujet au vandalisme.

Dans le cas de la figure 4, la paroi 102 dispositif de comptage 400 est composée en deux parties fixées de manière amovible. Un première partie, correspondant à une trappe 402 et comprenant un volume intérieur dans lequel le moyen de comptage 302 est positionné. La trappe 402 forme les bords latéraux du poteau. Une seconde partie, correspondant à un capot support 404 et formant la surface supérieure du poteau.

Le capot support 404 de la paroi 102 est agencé pour s'encastrer et/ou s'emboiter dans la trappe 402 de la paroi 102.

La paroi du dispositif 400 comprend aussi un bord latéral amovible 410. En particulier, le bord latéral amovible 410 est une partie de la trappe 402. Le bord latéral amovible 410 est fixé aux autres parties de la paroi 102 (notamment aux autres parties de la trappe 402) par des troisièmes moyens de fixation 412. Les troisièmes moyens de fixation 412 comprennent au moins une vis 412. Dans le cas illustré en figure 4, les troisièmes moyens de fixation comprennent 2 vis.

De manière non limitative, le dispositif de comptage 400 illustré en figure 4 est de forme rectangulaire. Bien entendu, dans d'autres variantes non illustrées, le dispositif de comptage 400 peut être de forme cylindrique, carrée, circulaire, conique, patatoïde, etc.

La paroi 102 du dispositif de comptage est, de préférence, lisse et sans discontinuité entre la fenêtre 104 et la paroi 102. En particulier, l'ensemble des surfaces extérieurs formant la paroi 102 (trappe 402 et support 404) sont lisses et sans discontinuité de matière, notamment sans excroissance.

Un tel agencement permet de limiter la présence de logements dans lesquels, par exemple, des insectes pourraient se loger ou de la neige pourrait stagner, ou des personnes pourraient laisser des déchets tels que des chewing-gums.

Notamment, le moyen de comptage 302 est plus difficilement accessible par des objets ou personnes circulant dans le milieu urbain.

Le dispositif de comptage 400 comprend aussi deux fenêtres 104 en germanium positionnées sur des bords latéraux opposés à la paroi 102, notamment à la trappe 402.

Le dispositif de comptage 400 illustré en figure 4 et de façon similaire au dispositif de comptage 100 illustré en figure 3, comprend une seule lentille de mesure 304. En outre, le moyen de mesure 305 comprend un support de carte 322 pour positionner et maintenir deux cartes capteur 318 et deux capteurs 306 captant du flux dans deux directions 328 et/ou deux sens différents.

Le volume intérieur de la paroi 102, notamment de la trappe est du même volume que le moyen de comptage 302 ou de volume, légèrement supérieur (i.e. inférieur à plus de 30 pourcents du volume du moyen de comptage 302).

Dans une première variante, la paroi 102 du dispositif de comptage 400 peut être formée à partir d'un assemblage de bois et/ou de plastique. Dans une seconde variante, la paroi 102 du dispositif de comptage 400 peut être formée à partir d'un assemblage de plastique recyclé et/ou de plastique. Par conséquent, le dispositif de comptage 400 peut être, de manière non limitative, composé à partir de matériaux entièrement naturels et/ou à partir de matériaux recyclés et/ou de matériaux se trouvant couramment dans le commerce. Une telle composition du dispositif de comptage 400 permet de garantir une robustesse, une qualité de mesure, une protection du moyen de comptage 302 et de s'adapter aux exigences écologiques et/ou à l'esthétique urbain.

De manière optionnelle, le moyen de comptage 302 est maintenu dans le volume intérieur de la trappe 402 par le capot support 404. Notamment, le moyen de comptage 302 est encastré dans le capot support 404 pour être maintenu dans le volume intérieur de la paroi 102, notamment dans le volume intérieur de la cavité 402.

Le pourtour 124 de la fenêtre 104 illustré en figure 4 est sous la forme d'une deuxième bride 408 de la fenêtre 104 pour maintenir la fenêtre 104 dans le dispositif de comptage 400. En particulier, la deuxième bride 408 est agencée pour servir d'interface entre la première bride 308 et la fenêtre 104.

La paroi 102, notamment la trappe 402, comprend au moins une ouverture 406 positionnée sur une extrémité latérale de la paroi 102. L'ouverture est agencée pour accueillir le pourtour 124 de la fenêtre 104. La fenêtre 104 est positionnée à ras de l'ouverture 406 donnant sur l'extérieur du dispositif 400. La deuxième bride 408 est positionnée dans l'ouverture 406. De cette manière, l'agencement de la deuxième bride 408 dans l'ouverture 406 comprend une fonction de maintien qui garantit un maintien du dispositif 400 dans la paroi 402.

De manière non limitative, le dispositif de comptage 400 comprend deux ouvertures 406 positionnées sur deux extrémités latérales opposées de la paroi 102. Ainsi, le dispositif de comptage est aussi maintenu dans la paroi 102 avec les deuxièmes brides 408 dans les ouvertures 406. En outre, un tel agencement permet de garantir la stabilité et la position horizontale de l'axe optique 312, notamment le parallélisme de l'axe optique 312 par rapport à une surface du sol sur lequel le poteau est fixé.

Bien entendu, l'invention n'est pas limitée aux exemples qui viennent d'être décrits. De nombreuses modifications peuvent être apportées à ces exemples sans sortir du cadre de la présente invention telle que définie dans les revendications.

## Revendications

1. Dispositif de comptage (100, 400) comprenant :
- une paroi (102) délimitant un volume intérieur,
- un moyen de comptage (302) d'objets positionné dans ledit volume intérieur, ledit moyen de comptage comprenant :
o un moyen de mesure (305) agencé pour enregistrer et/ou détecter un flux à au moins une longueur d'onde comprise entre 5 et 12 micromètres émis vers ledit moyen de comptage (302) par les objets présents dans une zone de détection, et
o une lentille de mesure (304) délimitant optiquement la zone de détection à l'extérieur dudit dispositif de comptage (100, 400), la lentille étant assemblée au reste du moyen de comptage (302) par une jonction étanche protégeant le moyen de mesure (305) de la poussière et/ou de l'humidité en provenance de l'extérieur du moyen de comptage (302)
**caractérisé en ce que** la paroi (102) du dispositif de comptage (100, 400) comprend une fenêtre (104) :
- comprenant du germanium, de préférence étant entièrement composée de germanium, et
- positionnée devant, de préférence centrée sur, la lentille de mesure (304), de manière à former un logement entre la lentille (304) et la fenêtre (104)
- assemblée au reste de la paroi (102) par une jonction étanche protégeant le moyen de comptage (302) de la poussière et/ou de l'humidité en provenance de l'extérieur de la paroi (102)
ladite lentille de mesure (304) et ladite fenêtre (104) étant agencées pour transmettre le flux émis par les objets présents dans ladite zone de détection vers ledit moyen de comptage (100, 400).

2. Dispositif de comptage (100, 400) selon la revendication précédente, **caractérisé en ce qu'**il comprend une surface extérieure lisse et sans discontinuité entre la fenêtre (104) et son pourtour (124) formé dans ladite paroi (102), de sorte que la fenêtre (104) ne soit pas enfoncée vers l'intérieur du dispositif (100, 400) par rapport à une surface extérieure de la paroi (102).

3. Dispositif de comptage (100, 400) selon l'une quelconque des revendications précédentes, **caractérisé en ce que** la lentille de mesure (304) comprend du germanium ou du polyéthylène.

4. Dispositif de comptage (100, 400) selon l'une quelconque des revendications précédentes, **caractérisé en ce que** la fenêtre (104) comprend un revêtement protecteur positionné sur un coté de la fenêtre (104) donnant sur l'extérieur dudit dispositif de comptage (100, 400).

5. Dispositif de comptage (100, 400) selon la revendication précédente, **caractérisé en ce que** le revêtement protecteur comprend un matériau carboné, de préférence du carbone adamantin.

6. Dispositif de comptage (100, 400) selon l'une quelconque des revendications précédentes, **caractérisé en ce que** la fenêtre (104) a, le long de la direction de propagation (328) dudit flux sur l'axe optique (312) entre la fenêtre (104) et la lentille de mesure (304), une épaisseur supérieure à 1 millimètre et/ou inférieure à 25 millimètres.

7. Dispositif de comptage (100, 400) selon l'une quelconque des revendications précédentes, **caractérisé en ce que** le logement forme un espace, dans la direction de propagation (328) dudit flux sur l'axe optique (312) entre la fenêtre (104) et la lentille de mesure (304), d'au moins 5 millimètres entre le centre optique de la lentille de mesure (304) et la fenêtre (104) positionnée devant ladite lentille de mesure (304).

8. Dispositif de comptage (100, 400) selon l'une quelconque des revendications précédentes, **caractérisé en ce qu'**il comprend des moyens d'accroche (108) agencés pour fixer la paroi (102) à un support (106).

9. Dispositif de comptage (400) selon l'une quelconque des revendications 1 à 7, caractérisé en qu'il forme un poteau (400) relié à un sol portant ledit dispositif de comptage (100, 400).

10. Dispositif de comptage (100, 400) selon l'une quelconque des revendications précédentes, **caractérisé en ce que** la lentille de mesure (304) est positionnée à une distance de la surface du sol supérieure à 500 millimètres et/ou inférieure à 1000 millimètres, de préférence comprise entre 700 à 850 millimètres.

11. Dispositif de comptage (100, 400) selon l'une quelconque des revendications précédentes, **caractérisé en ce que** la lentille de mesure (304) est maintenue dans un moyen de maintien du moyen de comptage (302), ledit moyen de maintien comprenant au moins une première bride (308) qui est en contact de ladite fenêtre (104).

12. Dispositif de comptage (100, 400) selon l'une quelconque des revendications précédentes, **caractérisé en ce que** la lentille de mesure (304) comprend une lentille de Fresnel.

13. Dispositif de comptage (100, 400) selon l'une quelconque des revendications précédentes, **caractérisé en ce que** la lentille de mesure (304) comprend :
- un diamètre supérieur à 5 millimètres et/ou inférieur à 25 millimètres, de préférence égal à 12.7 millimètres, et/ou
- une épaisseur supérieure à 0.1 millimètres et/ou inférieure à 4 millimètres, de préférence égale à 1 millimètre.

14. Dispositif de comptage (100, 400) selon l'une quelconque des revendications précédentes, **caractérisé en ce que** la paroi (102) dudit dispositif (100, 400) est formée par un assemblage de plusieurs parties (102₁, 102₂) agencées pour être fixées les unes aux autres de manière amovible.

15. Dispositif de comptage (100, 400) selon l'une quelconque des revendications précédentes, **caractérisé en ce qu'**il comprend deux fenêtres (104) comprenant chacune du germanium, de préférence étant chacune entièrement composée de germanium, la lentille de mesure (304) étant agencée pour pouvoir être positionnée devant, de préférence centrée sur, l'une ou l'autre des deux fenêtres (104) selon deux positions réversibles du moyen de comptage (302) dans ledit dispositif (100, 400).

## Patentansprüche

1. Zählvorrichtung (100, 400) umfassend:
- eine Wand (102), die ein Innenvolumen begrenzt,
- ein Zählmittel (302) für Objekte, das in dem Innenvolumen positioniert ist, wobei das Zählmittel umfasst:
o ein Messmittel (305), das so angeordnet ist, dass es einen Lichtstrom bei mindestens einer Wellenlänge zwischen 5 und 12 Mikrometer, der in Richtung des Zählmittels (302) von den in einem Erfassungsbereich befindlichen Objekten emittiert wird, aufzeichnet und/oder erfasst, und
o eine Messlinse (304), die den Erfassungsbereich außerhalb der Zählvorrichtung (100, 400) optisch begrenzt, wobei die Linse mit dem Rest des Zählmittels (302) durch eine wasserdichte Verbindung zusammengebaut ist, die das Messmittel (305) vor Staub und/oder Feuchtigkeit von außerhalb des Zählmittels (302) schützt, **dadurch gekennzeichnet,**
**dass** die Wand (102) der Zählvorrichtung (100, 400) ein Fenster (104) umfasst:
- Germanium enthaltend, vorzugsweise vollständig aus Germanium bestehend, und
- vor, vorzugsweise zentriert auf der Messlinse (304) positioniert ist, sodass eine Aufnahme zwischen der Linse (304) und dem Fenster (104) gebildet wird,
- das durch eine dichte Verbindung mit dem Rest der Wand (102) verbunden ist und so das Zählmittel (302) vor Staub und/oder Feuchtigkeit von außerhalb der Wand (102) schützt,
wobei die Messlinse (304) und das Fenster (104) angeordnet sind, um den von den in dem Erfassungsbereich vorhandenen Objekten emittierten Lichtstrom in Richtung des Zählmittels zu übertragen (100, 400).

2. Zählvorrichtung (100, 400) nach dem vorhergehenden Anspruch, **dadurch gekennzeichnet, dass** sie eine glatte und nahtlose Außenfläche zwischen dem Fenster (104) und dessen Umrandung (124) umfasst, die in der Wand (102) ausgebildet ist, so dass das Fenster (104) in Bezug auf eine Außenfläche der Wand (102) nicht in Richtung des Inneren der Vorrichtung (100, 400) gedrückt wird.

3. Zählvorrichtung (100, 400) nach einem der vorhergehenden Ansprüche, **dadurch gekennzeichnet, dass** die Messlinse (304) Germanium oder Polyethylen umfasst.

4. Zählvorrichtung (100, 400) nach einem der vorhergehenden Ansprüche, **dadurch gekennzeichnet, dass** das Fenster (104) eine Schutzbeschichtung umfasst, die auf einer Seite des Fensters (104) positioniert ist, die der Außenseite der Zählvorrichtung (100, 400) zugewandt ist.

5. Zählvorrichtung (100, 400) nach dem vorhergehenden Anspruch, **dadurch gekennzeichnet, dass** die Schutzbeschichtung ein kohlenstoffhaltiges Material, vorzugsweise diamantartigen Kohlenstoff, umfasst.

6. Zählvorrichtung (100, 400) nach einem der vorhergehenden Ansprüche, **dadurch gekennzeichnet, dass** das Fenster (104) entlang der Ausbreitungsrichtung (328) des Lichtstroms auf der optischen Achse (312) zwischen dem Fenster (104) und der Messlinse (304) eine Dicke aufweist, die größer als 1 Millimeter und/oder kleiner als 25 Millimeter ist.

7. Zählvorrichtung (100, 400) nach einem der vorhergehenden Ansprüche, **dadurch gekennzeichnet, dass** die Aufnahme in der Ausbreitungsrichtung (328) des Lichtstroms auf der optischen Achse (312) zwischen dem Fenster (104) und der Messlinse (304) einen Raum von mindestens 5 Millimetern zwischen dem optischen Zentrum der Messlinse (304) und dem Fenster (104), das vor der Messlinse (304) positioniert ist, bildet.

8. Zählvorrichtung (100, 400) nach einem der vorhergehenden Ansprüche, **dadurch gekennzeichnet, dass** sie Aufhängemittel (108) umfasst, die so angeordnet sind, dass sie die Wand (102) an einem Träger (106) befestigen.

9. Zählvorrichtung (400) nach einem der Ansprüche 1 bis 7, **dadurch gekennzeichnet, dass** sie einen Pfosten (400) bildet, der mit einem Boden verbunden ist, der die Zählvorrichtung (100, 400) trägt.

10. Zählvorrichtung (100, 400) nach einem der vorhergehenden Ansprüche, **dadurch gekennzeichnet, dass** die Messlinse (304) in einem Abstand von der Bodenoberfläche von mehr als 500 Millimetern und/oder weniger als 1000 Millimetern, vorzugsweise zwischen 700 und 850 Millimetern, positioniert ist.

11. Zählvorrichtung (100, 400) nach einem der vorhergehenden Ansprüche, **dadurch gekennzeichnet, dass** die Messlinse (304) in einem Haltemittel des Zählmittels (302) gehalten wird, wobei das Haltemittel mindestens einen ersten Flansch (308) umfasst, der das Fenster (104) berührt.

12. Zählvorrichtung (100, 400) nach einem der vorhergehenden Ansprüche, **dadurch gekennzeichnet, dass** die Messlinse (304) eine Fresnel-Linse umfasst.

13. Zählvorrichtung (100, 400) nach einem der vorhergehenden Ansprüche, **dadurch gekennzeichnet, dass** die Messlinse (304) umfasst:
- einen Durchmesser von mehr als 5 Millimetern und/oder weniger als 25 Millimetern, vorzugsweise gleich 12,7 Millimeter, und/oder
- eine Dicke von mehr als 0,1 Millimetern und/oder weniger als 4 Millimetern, vorzugsweise gleich 1 Millimeter.

14. Zählvorrichtung (100, 400) nach einem der vorhergehenden Ansprüche, **dadurch gekennzeichnet, dass** die Wand (102) der Vorrichtung (100, 400) durch einen Zusammenbau aus mehreren Teilen (1021, 1022) gebildet wird, die so angeordnet sind, dass sie lösbar miteinander befestigt werden können.

15. Zählvorrichtung (100, 400) nach einem der vorhergehenden Ansprüche, **dadurch gekennzeichnet, dass** sie zwei Fenster (104) umfasst, die jeweils Germanium enthalten, vorzugsweise jeweils vollständig aus Germanium bestehen, wobei die Messlinse (304) so angeordnet ist, dass sie gemäß zwei umkehrbaren Positionen des Zählmittels (302) in der Vorrichtung (100, 400) vor dem einen oder dem anderen der beiden Fenster (104) positioniert werden kann, vorzugsweise auf dieses zentriert werden kann.

## Claims

1. A counting device (100, 400) comprising:
- a wall (102) delimiting an internal volume,
- an object counting means (302) positioned in said internal volume, said counting means comprising:
o a measurement means (305) arranged to record and/or detect a flux at at least one wavelength between 5 and 12 micrometres emitted towards said counting means (302) by objects present in a detection zone, and
o a measurement lens (304) optically delimiting the detection zone outside said counting device (100, 400), the lens being assembled to the rest of the counting means (302) through a tight junction protecting the measurement means (305) from dust and/or moisture coming from outside the counting means (302)
**characterised in that** the wall (102) of the counting device (100, 400) comprises a window (104):
- comprising germanium, preferably being entirely comprised of germanium, and
- positioned in front of, preferably centred on, the measurement lens (304), so as to form a housing between the lens (304) and the window (104)
- assembled to the rest of the wall (102) through a tight junction protecting the counting means (302) from dust and/or moisture coming from outside the wall (102),
said measurement lens (304) and said window (104) being arranged to transmit the flux emitted by objects present in said detection zone to said counting means (100, 400).

2. The counting device (100, 400) according to the preceding claim, **characterised in that** it comprises a smooth external surface with no discontinuity between the window (104) and its perimeter (124) formed in said wall (102), so that the window (104) is not depressed inwardly of the device (100, 400) with respect to an external surface of the wall (102).

3. The counting device (100, 400) according to any of the preceding claims, **characterised in that** the measurement lens (304) comprises germanium or polyethylene.

4. The counting device (100, 400) according to any of the preceding claims, **characterised in that** the window (104) comprises a protective coating positioned on a side of the window (104) facing outwardly of said counting device (100, 400).

5. The counting device (100, 400) according to the preceding claim, **characterised in that** the protective coating comprises a carbonaceous material, preferably diamond like carbon.

6. The counting device (100, 400) according to any of the preceding claims, **characterised in that** the window (104) has, along the direction of propagation (328) of said flux on the optical axis (312) between the window (104) and the measurement lens (304), a thickness greater than 1 millimetre and/or less than 25 millimetres.

7. The counting device (100, 400) according to any of the preceding claims, **characterised in that** the housing forms a gap, in the direction of propagation (328) of said flux on the optical axis (312) between the window (104) and the measurement lens (304), of at least 5 millimetres between the optical centre of the measurement lens (304) and the window (104) positioned in front of said measurement lens (304).

8. The counting device (100, 400) according to any of the preceding claims, **characterised in that** it comprises hooking means (108) arranged to attach the wall (102) to a support (106).

9. The counting device (400) according to any one of claims 1 to 7, **characterised in that** it forms a post (400) connected to a ground carrying said counting device (100, 400).

10. The counting device (100, 400) according to any of the preceding claims, **characterised in that** the measurement lens (304) is positioned at a distance from the ground surface greater than 500 millimetres and/or less than 1000 millimetres, preferably between 700 and 850 millimetres.

11. The counting device (100, 400) according to any of the preceding claims, **characterised in that** the measurement lens (304) is held in a means for holding the counting means (302), said holding means comprising at least a first flange (308) which is in contact with said window (104).

12. The counting device (100, 400) according to any of the preceding claims, **characterised in that** the measurement lens (304) comprises a Fresnel lens.

13. The counting device (100, 400) according to any of the preceding claims, **characterised in that** the measurement lens (304) comprises:
- a diameter greater than 5 millimetres and/or less than 25 millimetres, preferably equal to 12.7 millimetres, and/or
- a thickness greater than 0.1 millimetres and/or less than 4 millimetres, preferably equal to 1 millimetre.

14. The counting device (100, 400) according to any of the preceding claims, **characterised in that** the wall (102) of said device (100, 400) is formed by an assembly of several parts (102₁,102₂) arranged to be removably attached to each other.

15. The counting device (100, 400) according to any of the preceding claims, **characterised in that** it comprises two windows (104) each comprising germanium, preferably each being entirely comprised of germanium, the measurement lens (304) being arranged to be positionable in front of, preferably centred on, either of the two windows (104) in two reversible positions of the counting means (302) in said device (100, 400).
